# EUROPÄISCHE PATENTSCHRIFT

(11) **EP 2 847 942 B1**
(45) Veröffentlichungstag und Bekanntmachung des Hinweises auf die Patenterteilung: **15.01.2020**
(21) Anmeldenummer: 13721965.5
(22) Anmeldetag: 08.05.2013
(51) Int. Cl.: H04L 12/40

(54) **VERFAHREN ZUM ÜBERTRAGEN VON DATEN MIT EINEM ETHERNET-TRANSPORTPROTOKOLL ZWISCHEN KNOTEN EINES KRAFTFAHRZEUGS SOWIE ZUR DURCHFÜHRUNG DES VERFAHRENS EINGERICHTETES STEUERGERÄT**
METHOD FOR TRANSMITTING DATA BETWEEN NODES OF A MOTOR VEHICLE USING AN ETHERNET TRANSPORT PROTOCOL AND CONTROL UNIT CONFIGURED TO CARRY OUT SAID METHOD
PROCÉDÉ POUR TRANSMETTRE DES DONNÉES AU MOYEN D'UN PROTOCOLE DE TRANSPORT ETHERNET ENTRE DES NOEUDS D'UN VÉHICULE À MOTEUR AINSI QU'UN APPAREIL DE COMMANDE CONÇU POUR LA MISE EN OEUVRE DE CE POCÉDÉ

(30) Priorität: 11.05.2012 DE 102012207900
(43) Veröffentlichungstag der Anmeldung: 18.03.2015
(73) Patentinhaber: Continental Automotive GmbH, 30165 Hannover (DE)
(72) Erfinder: BALBIERER, Norbert, 93309 Kelheim (DE); NÖBAUER, Josef, 92445 Neukirchen-Balbini (DE); ZINNER, Helge, 98646 Straufhain (DE)
(86) Internationale Anmeldenummer: PCT/EP2013/059637
(87) Internationale Veröffentlichungsnummer: WO 2013/167684

(56) Entgegenhaltungen:
- US-B1- 6 731 650
- MAIER A ET AL: "A Hierarchical Approach for Energy-Aware Distributed Embedded Intelligent Video Surveillance", PARALLEL AND DISTRIBUTED SYSTEMS, 2005. PROCEEDINGS. 11TH INTERNATIONA L CONFERENCE ON FUKUOKA, JAPAN 20-22 JULY 2005, PISCATAWAY, NJ, USA,IEEE, Bd. 2, 20. Juli 2005 (2005-07-20), Seiten 12-16, XP010852764, ISBN: 978-0-7695-2281-4
- KEN CHRISTENSEN ET AL: "IEEE 802.3az: the road to energy efficient ethernet", IEEE COMMUNICATIONS MAGAZINE, IEEE SERVICE CENTER, PISCATAWAY, US, Bd. 48, Nr. 11, 1. November 2010 (2010-11-01), Seiten 50-56, XP011320497, ISSN: 0163-6804
- ANDREAS RATH ET AL: "A two wire power over Ethernet approach for in-vehicle applications", INTELLIGENT SOLUTIONS IN EMBEDDED SYSTEMS (WISES), 2011 PROCEEDINGS OF THE NINTH WORKSHOP ON, IEEE, 7. Juli 2011 (2011-07-07), Seiten 55-60, XP032024135, ISBN: 978-1-4577-1550-1
- MARTIN MANDERSCHEID ET AL: "Network Calculus for the Validation of Automotive Ethernet In-vehicle Network Configurations", CYBER-ENABLED DISTRIBUTED COMPUTING AND KNOWLEDGE DISCOVERY (CYBERC), 2011 INTERNATIONAL CONFERENCE ON, IEEE, 10. Oktober 2011 (2011-10-10), Seiten 206-211, XP032011988, DOI: 10.1109/CYBERC.2011.42 ISBN: 978-1-4577-1827-4
- JINFENG LIU ET AL: "Communication speed selection for embedded systems with networked voltage-scalable processors", PROCEEDINGS OF THE TENTH INTERNATIONAL SYMPOSIUM ON HARDWARE/SOFTWARE CODESIGN. CODES 2002 (IEEE CAT. NO.02TH8627), 1. Januar 2002 (2002-01-01), Seiten 169-174, XP055073605, DOI: 10.1109/CODES.2002.1003620 ISBN: 978-1-58-113542-8
- CHLASSERINI C-F ET AL: "Energy consumption and image quality in wireless video-surveillance networks", PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, Bd. 5, 15. September 2002 (2002-09-15), Seiten 2357-2361, XP010614150, ISBN: 978-0-7803-7589-5

## Beschreibung

Die Erfindung betrifft ein Verfahren zum Übertragen von Daten in einem Kraftfahrzeug aus einer Anwendung mit einem Ethernet-Transportprotokoll. Bei den Daten handelt es sich insbesondere um zeitkritische Streamingdaten, an die bestimmte QoS (Quality of Service) Anforderungen bestehen, die insbesondere auch eine fixe, laut Standard definierte Sendefrequenz und eine maximal erlaubte Übertragungszeit vorgibt, die durch die Anwendung bestimmt werden kann. Ein typischer Anwendungsfall für solche Daten sind Audio- und/oder Videodaten oder auch Kontrolldaten, die eingekapselt in Datenpakete im Rahmen eines Ethernet-Protokolls übertragen werden.

Die Übertragung der Daten zwischen Knoten eines Kraftfahrzeugs, die insbesondere (zumindest teilweise auch) als Steuergeräte des Kraftfahrzeugs, beispielsweise als Multimedia-Steuergeräte, ausgebildet sein können, erfolgt insbesondere nach dem für derartige Streamingdaten vorgesehenen Ethernet-AVB-Transportprotokoll. Die verkapselten Inhalte (Daten) werden dabei bevorzugt zusammen mit Zusatzinformationen beispielsweise über die Abtastrate, die Anzahl der Audiokanäle, das Videoformat und dessen Auflösung und/oder die Kompression der Daten übertragen. Dies ist durch den Standard IEEE 1722 realisiert.

Bei der Übertragung von Daten mittels dieses Ethernet-Transportprotokolls ist vorgesehen, dass die Daten in zyklischen Abständen über ein Ethernet-basiertes Netzwerk ausgesendet werden. Das Verfahren sieht ferner vor, dass die lokalen Sender und Empfänger (PHY) eines Knotens, üblicher Weise in Form Sendeempfängers (Transceiver), in Nicht-Nutzungsperioden, in denen keine Daten zu übertragen sind, deaktiviert werden und, sofern Daten zur Übertragung anstehen, wieder aktiviert werden, wobei die lokalen Sender und Empfänger (PHY) in einer Deaktivierungszeit (T_{S}) aus einem Betriebsmodus (aktiv) in einen Ruhemodus (LPI) überführt und in einer Aktivierungszeit (T_{W}) aus dem Ruhemodus in einen Betriebsmodus überführt werden.

Die minimale Zykluszeit (T_{CT}) ergibt sich also aus der Summe der aktiven Übertragungszeit der Daten, auch Frameübertragungszeit (T_{FRM}) genannt, und den Übergangszeiten, d. h. der Deaktivierungszeit (T_{S}) und der Aktivierungszeit (T_{W}). Um Strom sparen zu können, muss die Zykluszeit also größer als die minimale Zykluszeit (T_{CT}) sein, damit die lokalen Sender und Empfänger sich für einen gewissen Zeitraum im Ruhemodus befinden. Die lokalen Sender und Empfänger eines Knotens, welche auch als PHY-Geräte bezeichnet werden und insbesondere die bitweise Datenübertragung in der physikalischen Schicht bzw. Bitübertragungsschicht erledigen, werden in Nicht-Nutzungsperioden, in denen keine Daten zu übertragen sind, also deaktiviert und sofern in einem Übertragungsrahmen (MAC-Frame) einer vorgelagerten Schicht, insbesondere der sogenannten MAC-Schicht, Daten zur Übertragung anstehen, wieder aktiviert.

Neben den typischen Bussystemen im Automobilbereich, wie beispielsweise CAN-Bus, FlexRay oder dergleichen, hält auch ein nach einem Ethernet-Transportprotokoll funktionierende Bussystem zunehmend Einzug in das Kraftfahrzeug. Das Ethernet, d. h. ein nach dem Ethernet-Transportprotokoll funktionierendes Netzwerk, welches üblicherweise kabelgebunden ist, verfügt über eine hohe Bandbreite, ist in hohem Maße flexibel und weltweit standardisiert. Daher wird sich das Ethernet auch in den nächsten Jahren als wichtige Systemschnittstelle eines Kraftfahrzeugs darstellen.

Durch die zunehmende Elektrifizierung der Kraftfahrzeuge steigt jedoch auch deren Strombedarf zunehmend an. Dies wiederum führt zu einem erhöhten Kraftstoffverbrauch, der sich kostenmäßig direkt auch auf den Endverbraucher umlegt. Weiterhin wird die heutige Besteuerung eines Kraftfahrzeugs aufgrund des Ausstoßes von CO₂ (Kohlendioxid) errechnet, was sich wiederum aus dem Energieverbrauch an Kraftstoff ableiten lässt. Die Reichweite eines elektrisch betriebenen Fahrzeugs ist zudem an die Kapazität der Batterie und damit den Strombedarf der in dem Kraftfahrzeug angeschlossenen Verbraucher gekoppelt.

Die lokalen Sender und Empfänger (PHY-Geräte), welche auch als Ethernet-Transceiver bzw. Ethernet-Sendeempfänger bezeichnet werden, weisen in einem üblichen Netzwerkbetrieb einen konstanten Strombedarf auf, der unabhängig von der Auslastung der Verbindung in der Datenübertragung ist, da sogenannte IDLE-Codegruppen gesendet werden, wenn über die Datenverbindung keine Nutzdaten zu übertragen sind. Dieser Strombedarf besteht während der Übergangsphasen zum Aktivieren und/oder Deaktivieren der PHY-Geräte.

Ein neuer Standard IEEE 802.3az (auch als Energy Efficient Ethernet - EEE bezeichnet) stellt die vorbeschriebenen Erweiterungen zur Verfügung, um in den lokalen Sendern und den lokalen Empfängern auf der anderen Seite der Kommunikationsverbindungen das Übersenden von IDLE-Codegruppen während der Perioden ohne Nutzdatenübertragung zu deaktivieren, statt die IDLE-Codegruppen weiter zu senden. Diese Deaktivierung wird auch als Low Power Idle - LPI (Energiesparmodus oder Ruhemodus) bezeichnet. Hierdurch kann der Strombedarf in der die eigentliche Datenübertragung physikalisch realisierenden Bitübertragungsschicht reduziert werden.

Durch den vorgenannten Standard ist auch die minimale Übergangszeit zwischen dem Normalzustand der Ethernet-Transceiver, in denen eine Datenübertragung stattfinden kann, und dem deaktivierten Modus (LPI) festgelegt. Dabei ist die Zeit für das Aufwachen bzw. Aktivieren eines Senders und/oder Empfängers aus dem Energiesparmodus (LPI) mit T_{W} = 30 µs spezifiziert. Ferner ist eine Übergangszeit festgelegt, die benötigt wird, um den lokalen Sender und/oder Empfänger in einen Ruhemodus (LPI-Zustand) zu überführen. Diese Deaktivierungszeit T_{S} beträgt nach dem vorgesehenen Standard T_{S} = 200 µs. Die Aktivierungszeit T_{W} und die Deaktivierungszeit T_{S} sind die laut Standard minimale Werte und dürfen nicht verkleinert werden, um standardkonform zu bleiben. Die Standardkonformität ist notwendig, um eine universelle Kommunikationsfähigkeit der Geräte untereinander zu erreichen.

Zur Energieeinsparung einer Ethernet-AVB-Verbindung (Ethernet Audio Video Bridging) schlägt die US 2011/0090914 A1 ein Verfahren vor, bei dem ein energieeffizientes Netzwerk (EEN - Energy Efficient Networking) ausgehandelt wird. Hierbei wird durch die MAC-Steuergeräte und die PHY-Sendeempfänger eine Datenrate der Verbindung ausgehandelt, wobei eine niedrigere Datenrate die durch die Sendeempfänger verbrauchte Leistung reduziert. Um die Verbindung aufrecht zu erhalten und eine aufwendige Abstimmung der PHY-Sendeempfänger untereinander (Training) zu vermeiden, werden regelmäßig Zeitfenster der Ethernet-AVB-Verbindung genutzt, um Konfigurationsparameter und/oder Trainingsinformationen zu aktualisieren. Nachteilig ist hier jedoch, dass die Datenrate vorher bekannt sein muss, um eine entsprechende Einstellmöglichkeit zu gewähren.

Aus der EP 2 073 464 A1 ist ein Verfahren bekannt, bei dem die PHY-Sendeempfänger auf verschiedenen Datenkanälen Daten übertragen. Wenn der Datenpaketverkehr aufgegeben wird, können einige Kanäle still geschaltet oder in einen Leerlaufmodus mit geringerem Energieverbrauch zurückgesetzt werden, wobei vorgeschlagen wird, einen oder mehrere der stillen Kanäle zur Übertragung von Steuersignalen zu nutzen.

Einen weiteren Aspekt einer Energieeinsparung beschreibt die US 2009/0158377 A1, die eine Datenübertragung nach dem Ethernet-AVB-Transferprotokoll beschreibt, wobei über die Ethernet-Kabelverbindung neben der Datenübertragung auch eine Energieversorgung der Empfangsgeräte erreicht wird, welche die empfangenden Daten weiter verarbeiten. Da der Energiebedarf der Empfangsgeräte für die Weiterverarbeitung der Daten u. a. auch von der Menge der empfangenen Daten und damit der Sendefrequenz der Datenpakte abhängt, wird vorgeschlagen, die über das Ethernetkabel zur Verfügung gestellte Energie beispielsweise von der Sendefrequenz abhängig zu machen. Der Energiebedarf für die eigentliche Kommunikationstechnik wird dadurch aber nicht reduziert.

In "A Hierarchical Approach for Energy-Aware Distributed Embedded Intelligent Video Surveillance", Maier et al., 2005, Proceedings 11th International Conference on Parallel and Distributed Systems, ICPADS'05, Bd. 2, 20. Juli 2005, Seiten 12-16, ist eine Anpassung der Menge der zu übertragenden Daten in Abhängigkeit von einer geforderten Energieeinsparung am Beispiel eines Überwachungskamerasystems gezeigt. Die Anpassung der Menge der zu übertragenden Daten erfolgt dabei durch Reduzierung der Bildwiederholrate bzw. durch Verringerung der Bildauflösung oder eine Kombination der beiden.

Ken Christensen et al. erläutern in "IEEE 802.3az: the road to energy efficient ethernet" das im IEEE 802.3az Standard festgelegte Konzept des Versetzens von Schnittstellen in einen Leerlaufbetrieb mit geringer Energieaufnahme zwischen Phasen, in denen aktiv Daten gesendet werden. Dabei werden auch unterschiedliche Szenarien verglichen, bei denen entweder ein großer Block von zusammenhängenden Datenpaketen oder kleinere Blöcke von zusammenhängenden Datenpaketen gesendet werden, und es wird auf auf die unterschiedlichen Auswirkungen auf den Protokolloverhead hingewiesen.

In "A two wire Power over Ethernet approach for in-vehicle applications" diskutieren Andreas Rath et al. die Verwendung von ungeschirmten verdrillten Zweidrahtleitungen zur kombinierten Datenübertragung und Energieversorgung im automobilen Umfeld, wobei der IEEE 802.3at Standard nicht eingehalten wird.

Bevor das erfindungsgemäß vorgeschlagene Verfahren näher beschrieben wird, wird der allgemeine Mechanismus der Datenübertragung gemäß einem Ethernet-Transportprotokoll zum Verständnis noch kurz erläutert.

In einem Ethernet-Netzwerk ermöglichen die Sendeempfänger (Ethernet-Transceiver, PHY-Geräte) in einer ersten Protokollschicht (PHY-Schicht), auch physikalische Schicht oder Bitübertragungsschicht genannt, die eigentliche Kommunikation zwischen verbundenen Netzwerkteilnehmern durch das physikalische Senden und Empfangen der Datenpakete. Die Verbindungssteuerung wird in einer zweiten (der ersten Protokollschicht vorgelagerten) Protokollschicht (MAC-Schicht, Media Access Control-Schicht), auch Sicherungsschicht oder Data Link genannt, mittels MAC-Steuergeräten ausgeführt. Durch die MAC-Steuergeräte der zweiten Protokollschicht werden Übertragungsrahmen (MAC-Frames) gebildet, in denen die eigentlichen Daten dann bitweise zusammengestellt und zur eigentlichen Datenübertragung an die PHY-Schicht übertragen werden. Eine Datenübertragung erfolgt nur, wenn ein Übertragungsrahmen (MAC-Frame) in der zweiten Protokollschicht zur Übertragung ansteht. Um die Datenverbindung aufrecht zu erhalten, werden IDLE-Pakete bzw. IDLE-Codegruppen gesendet, wenn keine Daten zur Übertragung anstehen. Die eigentlichen Anwendungen (Applikationen), beispielsweise in Steuergeräten, finden sich dann in der zweiten Protokollschicht weiter vorgelagerten Protokollschichten.

Das Ethernet-AVB-Transportprotokoll IEEE 1722 erweckt zunehmend Interesse zum Einsatz in Kraftfahrzeugen. Dieses Protokoll sendet in zyklischen Abständen Daten über ein Ethernetbasiertes Netzwerk. Vor dem eigentlichen Senden der Daten werden die erforderlichen Ressourcen, beispielsweise die Bandbreite und/oder die Senderate von dem lokalen Sender zu dem lokalen Empfänger hin reserviert. Dies kann insbesondere auch mit dem eigenen MSRP-Protokoll (Multiple Stream Reservation Protocol) durchgeführt werden, welches Bestandteil des AVB-Standards 802.1Qat ist. Hiermit wird unter anderem der Sendezyklus propagiert. Typische Senderaten betragen 125 µs⁻¹ oder 250 µs⁻¹, was deutlich kürzer als der minimale Zyklus aus Aktivierungszeit T_{W} und Deaktivierungszeit T_{S} ist. Im Rahmen dieses AVB-Standards 802.1Qat ist daher eine Energieeinsparung durch das Energy Efficient Ethernet (EEE), in Senderichtung der Full-Duplex Ethernet Verbindung, nicht möglich.

Traffic-Shaping ist eine weitere Funktion des Ethernet-AVB-Standards, welche durch den Standard Q802.3Qav implementiert wird. Traffic-Shaping bietet die Möglichkeit, den Datenfluss aus einem Knoten des Netzwerkes hinaus zu kontrollieren, wobei eine bestimmte Senderate und/oder Bandbreite eingestellt wird. Die Grundidee des Traffic-Shaping liegt darin, zu schnell ankommende Datenpakete von den oberen Protokollschichten zu verzögern, um ein gleichmäßiges Senden zu den physikalischen Sendegeräten der Bitübertragungsschicht einzuleiten. Durch diese Reservierungsnachricht und den darin enthaltenen Parametern wird der Traffic-Shaper der jeweiligen Ausgangsports ein- bzw. umgestellt.

Da die typische Senderate auch in diesem Modus jedoch höher ist als der minimale Sendezyklus aus Aktivierungszeit T_{W} und Deaktivierungszeit T_{S}, lässt sich in diesem Modus kein Strom bzw. keine Energie sparen. Stattdessen kommt es lediglich zu Verzögerungen der Datenpakete. Das Echtzeitverhalten des Ethernet-AVB-Standards wird also durch Energy Efficient Ethernet (EEE) negativ beeinflusst.

Das zugrunde liegende Problem ist die Aktivierungszeit T_{W}, die beim Verlassen des deaktivierten Zustands der lokalen Sender und/oder Empfänger immer benötigt wird, um die lokalen Sender- und Empfänger zu aktivieren. Ein lokaler Sender und/oder Empfänger verlässt nach dem vorgeschlagenen Standard den deaktivierten Zustand erst, wenn ein Übertragungsrahmen (MAC-Frame) zur Verfügung steht, in dem Daten übertragen werden sollen. Da die oberen (vorgelagerten) Schichten des Datenübertragungsprotokolls (Kommunikationsmodell) von der physikalischen Datenübertragung weitgehend entkoppelt sind, kann also stets eine Verzögerung der Aktivierungszeit T_{W} in der Größenordnung von 30 µs entstehen, um beispielsweise den lokalen Sender zu aktivieren. Dann muss ein Übertragungsrahmen warten und wird um diese Zeit verzögert.

Aufgabe der vorliegenden Erfindung ist es, einen Strom- bzw. Energiesparmodus entsprechend einer vorgegebenen Anforderung zur Energieeinsparung umzusetzen, ohne dass es zu unkontrollierten Verzögerungen der Datenübertragung und damit Einbußen bei der Dienstgüte (QoS, Quality of Service) kommt.

Diese Aufgabe wird bei einem Verfahren der eingangs genannten Art erfindungsgemäß mit den Merkmalen des Anspruchs 1 gelöst.

Dabei ist insbesondere vorgesehen, dass bei einer Anforderung zur Einsparung von Energie durch die Anwendung die Sendefrequenz, mit der die Anwendung die Daten aussendet, zumindest bis zum Erreichen eines vorgegebenen Grenzwertes erniedrigt wird. Das heißt, erfindungsgemäß wird der Sendezyklus der Daten erhöht und somit die Datenübertragung verlangsamt. Da es sich bei den durch die Anwendung ausgesandten Daten insbesondere um Streamingdaten handelt, die anders als reine Statusinformationen oder zeitunkritische Datenübertragungen innerhalb einer bestimmten Zeit nach der Aussendung durch den Sender des der Anwendung zugeordneten Knotens bei dem gewünschten Empfänger der Daten eintreffen müssen, kann die Sendefrequenz beispielsweise durch Verlängerung des Ruhe- bzw. Energiesparmodus nicht beliebig angepasst werden. Häufig sind Anwendungen jedoch so ausgelegt, dass die zu übertragenden Daten, und insbesondere Streamingdaten, so schnell wie möglich, d. h. einer maximal realisierbaren Sendefrequenz, ausgesendet werden, damit auch im Falle von beispielsweise unvorhergesehenen Verzögerungen auf dem Kommunikationsweg die Daten so rechtzeitig bei dem Empfänger vorliegen, dass der Endnutzer in der Anwendung keine Qualitätseinbußen erkennt.

In Anwendungen bei Kraftfahrzeugen, insbesondere bei elektromotorisch angetriebenen Kraftfahrzeugen, kann zur Stromeinsprung bei der Netzwerkkommunikation die Sendefrequenz dabei aber von der maximalen Sendefrequenz zugunsten eines Ruhe-bzw. Energiezustandes soweit verringert werden, dass einerseits die Daten für die Anwendung noch rechtzeitig bei dem Empfänger eintreffen und andererseits ein Ruhe- bzw. Energiesparmodus der Sendeempfänger (Ethernet-Transceiver) der beteiligten Netzwerkknoten eingehalten werden kann.

Durch die erfindungsgemäß dynamische Anpassung des Sendeverhaltens insbesondere durch Einstellung der Sendefrequenz, ggf. aber auch - wie später noch beschrieben werden wird - durch Anpassung des Inhalts der zu übertragenden Daten, wird eine variable Energie- und Stromeinsparung erreicht, die flexibel an die auch quantitativ vorgegebene Anforderung zur Einsparung von Energie angepasst werden kann. Indem die Sendezeit in Kenntnis der Aktivierungs- und der Deaktivierungszeit der Sender- und Empfänger (PHY-Geräte der Bitübertragungsschicht) bekannt ist, können unbeabsichtigte Verzögerungen bei der Übertragung durch die Aktivierungszeit T_{W} verhindert werden, da die Aktivierung der Sender und/oder Empfänger der beteiligten Knoten bei der Bestimmung der Zykluszeit, respektive der Sendefrequenz, mit berücksichtigt werden. So tritt ein unerwünschter Jitter und eine unerwünschte Verzögerung der Daten nicht ein. Dies führt dazu, dass erfindungsgemäß die garantierte, durch die Anwendung vorgegebene Dienstgüte (QoS) eingehalten werden kann, indem die Erniedrigung der Sendefrequenz bis zum Erreichen eines vorgegebenen Grenzwertes erniedrigt wird. In einer einfachen Ausführungsform kann dieser Grenzwert, ggf. abhängig von der konkreten Anwendung, fest vorgegeben sein.

In einer bevorzugten Ausführungsform des vorgeschlagenen Verfahrens ist jedoch vorgesehen, dass der Grenzwert der Sendefrequenz definiert ist durch das Inverse der Summe der Übertragungszeit (T_{FRM}) der für die von der Anwendung innerhalb eines Übertragungszyklus zu übertragenden Daten, vorzugsweise der für ein Funktionieren der Anwendung notwendigerweise unbedingt zu übertragenden Daten, aus der Deaktivierungszeit (T_{S}) und aus der Aktivierungszeit (T_{W}). Der Grenzwert der Sendefrequenz ist gerade das Inverse der Summe dieser vorgenannten Zeiten, die bei der Anwendung eines Energy Efficient Ethernet unbedingt als minimale Zykluszeit eingehalten werden müssen, um ein verzögerungsfreies und damit für die Anwendung vorhersagbares Übertragen der Daten zu ermöglichen.

Der Übertragungszyklus ist dabei allgemein definiert als die Zeit von einer Datenübertragung zu einer nächsten Datenübertragung, das heißt als diejenige Zeit, mit der die Anwendung Zyklus neue Daten erhält und aussendet. Vorgaben für den Übertragungszyklus können aus der Art der Anwendung (Audio- und/oder Videodaten, Sicherheitsanwendungen oder dergleichen) folgen. Der Übertragungszyklus auf dem Netzwerk selbst wird im Falle von IEEE 1722 und IEEE 1733 durch das Übertragungsprotokoll festgelegt.

Solange dieser Grenzwert der Sendefrequenz eingehalten wird, kann der Übertragungszyklus durch Einfügen eines Ruhemodus verlängert werden, in welchem die Sender und/oder Empfänger der an der Datenübertragung beteiligten Knoten nicht mit Energie versorgt werden. Dies führt zu einer Energieeinsparung im Vergleich zu einem Übertragungszyklus gleicher Dauer, in dem die Sender und/oder Empfänger der an der Datenübertragung beteiligten Knoten dauernd aktiv sind, um beispielsweise zu jeder Zeit anfallende Daten übertragen zu können.

Gemäß einer bevorzugten Ausführungsform des erfindungsgemäß vorgeschlagenen Verfahrens kann die Anforderung zur Einsparung von Energie quantitativ an die Anwendung vorgegeben werden, wobei sich die quantitative Angabe auf die aktuelle für die Übertragung verwendete Energie bezieht. Die Anforderung zur Einsparung der Energie kann insbesondere prozentual zu der aktuell für die Übertragung verwendete Energie vorgegeben werden.

Nach Erhalt einer Anforderung, die sowohl extern an die Anwendung übertragen werden kann als auch intern zyklisch durch die Anwendung selbst erfolgen kann, ermittelt die Anwendung aus der Dauer des aktuellen Betriebsmodus, d. h. der aktiven Zeit der Sender und/oder Empfänger der an der Kommunikation beteiligten Knoten, der Dauer der Aktivierungszeit und der Dauer der Deaktivierungszeit mit dem jeweils während dieser Zeiten bekannten Energieverbrauch (der während des Betriebsmodus, der Aktivierungszeit und der Deaktivierungszeit auch gleich sein kann) und aus der Dauer des aktuellen Ruhemodus mit dem bekannten Energieverbrauch, der insbesondere auch Null sein kann, die notwendige Verlängerung der Dauer des Ruhemodus, um die quantitative Anforderung zur Energieeinsparung der Energie zu erreichen, die insbesondere prozentual vorgegeben ist.

Erfindungsgemäß kann die Anwendung die ermittelte, notwendige Verlängerung dann mit dem vorgegebenen Grenzwert vergleichen und die Sendefrequenz entsprechend der ermittelten Verlängerung der Dauer des Ruhe- bzw. Energiesparmodus um den ermittelten Wert reduzieren, solange dieser Grenzwert nicht erreicht ist. Andernfalls kann zumindest eine Reduzierung bis auf den vorgegebenen Grenzwert erfolgen, wobei die Anwendung dann - zumindest bei einer externen Anforderung zur Energieeinsparung - eine Datenmeldung ausgeben kann, dass eine Energieeinsparung in dem gewünschten Umfang nicht erreichbar ist bzw. nicht ohne Qualitätseinbußen bei der Übertragung der Daten erreichbar ist. Hieraus kann ein Energiemanager des Kraftfahrzeugs, der die Anforderung zur Einsparung von Energie ausgegeben hat, reagieren und beispielsweise einen Grad der Notwendigkeit der Energieeinsparung vorgeben, der es der Anwendung ermöglicht, einen Grad der tolerierbaren Qualitätseinbußen zu ermitteln. Ein derartiger Grad der Notwendigkeit einer Energieeinsparung kann natürlich auch unmittelbar bei der ersten Anforderung zur Einsparung von Energie mit übersandt werden.

Gemäß einer besonders bevorzugten Ausführungsform des vorgeschlagenen Verfahrens kann die Anwendung dann überprüfen, ob die Anforderungen der Anwendung an einen minimalen Übertragungszyklus, d. h. die Zeit, in der der Empfänger die Daten erwartet, und/oder an den Inhalt der zu übertragenen Daten reduziert werden können. Hierbei können entsprechend der Wichtigkeit der zu erreichenden Energieeinsparung unterschiedliche Qualitätseinbußen hingenommen werden.

Eine hohe Notwendigkeit zur Energieeinsparung ergibt sich beispielsweise bei elektromotorisch betriebenen Fahrzeugen, wenn die gespeicherte Energie zu Ende geht und zur Reichweitenerhöhung der nicht dem Antrieb des Fahrzeugs dienende Energieverbrauch stark reduziert werden muss oder soll.

Die Verlängerung des minimalen Übertragungszyklus führt entsprechend der vorgenannten Definition zu einer Verringerung des Grenzwertes für die Absenkung der Sendefrequenz, so dass ein längerer Ruhemodus der an der Kommunikation beteiligten Sender und/oder Empfänger erreichbar ist.

Alternativ kann auch die zu übertragende Datenmenge reduziert werden und damit die Übertragungszeit respektive die Dauer des aktiven Betriebsmodus der Sender und/oder Empfänger zugunsten eines Ruhemodus der Sender und/oder Empfänger. Die Reduzierung der zu übertragenden Datenmenge ist mit Qualitätseinbußen für die Anwendung verbunden. Bei Audio- oder Videodaten kann beispielsweise die Auflösung reduziert werden. Bei anderen Informationen kann die Informationsdichte verringert werden, d. h. eine verzögerte Übertragung der einzelnen Informationen erfolgen, beispielsweise durch ein zyklisches Aussenden der zu übertragenden Informationen anstelle einer Übertragung sämtlicher Daten auf einmal.

Entsprechend kann gemäß einer besonderen Ausführungsform des vorgeschlagen Verfahrens bei Videodaten die Videoqualität eines zu übertragenden Datenstroms reduziert werden, beispielsweise durch Verwendung eines anderen Codec, durch eine Reduzierung der übertragenden Frames pro Sekunde und/oder durch eine kleinere Auflösung der Daten.

Entsprechend kann erfindungsgemäß gemäß einer anderen Ausführungsform, die natürlich auch mit der Übertragung der Videodaten kombiniert werden kann, bei Audiodaten die Audiogualität eines zu übertragenden Datenstroms reduziert werden, beispielsweise durch Verwendung eines anderen Codec, durch eine Reduzierung der Kanalanzahl und/oder durch eine kleinere Auflösung der übertragenden Daten. Beispielsweise kann anstelle eines echten Surround Sound mit sechs Datenkanälen lediglich ein Virtual Surround Sound mit zwei Datenkanälen übertragen werden. Auch ist ein Übergang von Stereodatenübertragung zu Monodatenübertragung denkbar, um die Kanalanzahl weiter zu reduzieren. Der Kerninhalt der Video- und/oder Audiodaten bleibt trotzdem erhalten, so dass der Nutzer beispielsweise zugunsten einer erhöhten Reichweite seines Kraftfahrzeugs gewisse Qualitätseinbußen gerne in Kauf nimmt. Diese können erfindungsgemäß besonders einfach durch die Anwendung selbst gesteuert werden.

Ein ganz wesentlicher erfindungsgemäßer Aspekt einer bevorzugten Ausführung der vorliegenden Erfindung liegt also darin, dass die Sendefrequenz durch die jeweils betroffene Anwendung, welche die Datenübertragung veranlasst, ausgelöst wird, so dass die Energieeinsparung von einer systemübergeordneten Ebene auf eine Anwendungsebene übertragen wird, die einfacher einstellbar und ggf. auch durch den Nutzer parametrierbar ist. Auch ohne die Möglichkeit zur Parametrierung durch den Nutzer bietet ein derartiges Vorgehen dem Hersteller und Anbieter von Anwendungen die Möglichkeit, diese nach seinen Vorstellungen an der Einsparung elektrischer Energie im Kraftfahrzeug zu beteiligen.

Im Rahmen der Anwendung des erfindungsgemäß vorgeschlagenen Verfahrens kann der Inhalt der zu übertragenden Daten vorzugsweise nur reduziert werden, wenn die quantitative Anforderung zur Einsparung von Energie ohne Überschreiten des Grenzwerts nicht möglich ist. Bevor also der Inhalt der zu übertragenden Daten durch Verlängerung der Sendefrequenz und/oder Reduzierung der Daten vorgenommen wird, kann erfindungsgemäß eine entsprechende Überprüfung des Grenzwerts vorgesehen sein.

Um die Anwendung dauerhaft an einer Energieeinsparung zu beteiligen, kann erfindungsgemäß auch vorgesehen sein, dass die Anpassung der Sendefrequenz zyklisch und/oder bei einer Änderung der aus der Anwendung heraus zu übertragenden Datenmenge automatisch erfolgt, wobei insbesondere eine maximale Energieeinsparung erreicht wird bzw. erreicht werden soll. In diesem Fall kommt die Anforderung zur Einsparung von Energie intern aus der Anwendung selbst, wobei jeweils eine maximal mögliche Energieeinsparung anstrebbar ist. Eine maximale Energieeinsparung in diesem Sinne kann auch bedeuten, dass eine vorgebbare Übertragungszeitreserve mit eingerechnet wird, bezogen auf die aktuell zu übertragende Datenmenge, damit die Anwendung flexibel bleibt. Die maximale Energieeinsparung kann hierbei durch die Anwendung also selbst vorgegeben werden.

Die Erfindung betrifft ferner ein Steuergerät mit einer Recheneinheit, wobei das Steuergerät als Knoten eines Netzwerks in einem Fahrzeug mit einem anderen Knoten kommuniziert und dabei Daten einer Anwendung überträgt. Die Recheneinheit ist durch Programmcodemittel zum Übertragen von Daten mit einem Ethernet-Transportprotokoll zwischen Knoten des Fahrzeugs eingerichtet. Erfindungsgemäß ist vorgesehen, dass die Recheneinheit ferner durch Programmcodemittel zum Durchführen des vorbeschriebenen Verfahrens oder Teilen hiervon eingerichtet ist.

Entsprechend betrifft die Erfindung auch ein Computerprogrammprodukt mit Programmcodemitteln, die dazu geeignet sind, bei Ausführung auf einer Recheneinheit die Recheneinheit zur Durchführung des vorbeschriebenen Verfahrens oder Teilen hiervon einzurichten. Es zeigen:
- Fig. 1: den normalen Ablauf einer Datenübertragung gemäß eines Ethernet-AVB-Transportprotokolls unter Verwendung des Energy Efficient Ethernet in einer ersten Realisierung der Erfindung;
- Fig. 2: den normalen Ablauf einer Datenübertragung gemäß eines Ethernet-AVB-Transportprotokolls unter Verwendung des Energy Efficient Ethernet in einer zweiten Realisierung der Erindung;
- Fig. 3: die Dauer eines minimalen Übertragungszyklus T_{CT};
- Fig. 4: ein Beispiel eines erfindungsgemäßen Kommunikationsnetzwerks eines Kraftfahrzeugs mit Knoten, zwischen denen eine Kommunikation stattfindet, und
- Fig. 5: eine Aufstellung der Zeitaufteilung für die verschiedenen Modi innerhalb eines erfindungsgemäßen Übertragungszyklus.

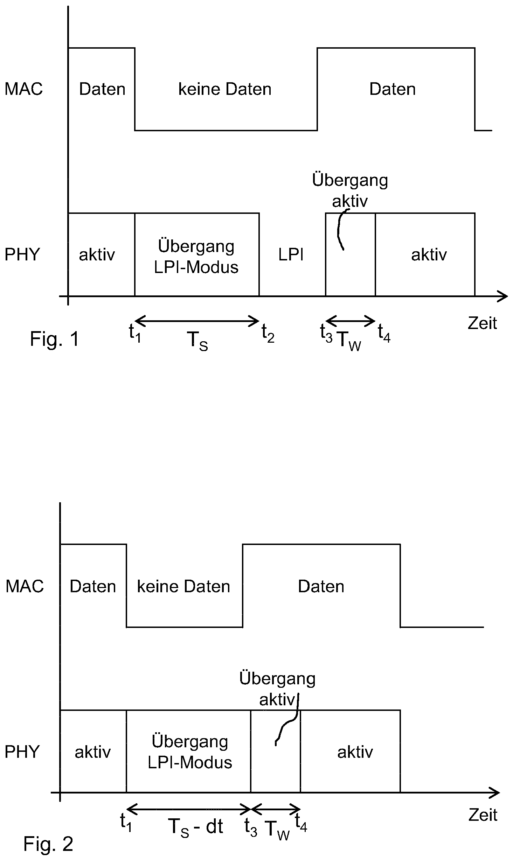

Fig. 1 zeigt den normalen zeitlichen Abstand der Zustandswechsel zwischen dem Energiesparmodus (LPI) und dem Normal-bzw. Betriebszustand (aktiv) der lokalen Sender- und Empfänger (PHY-Geräte) in der Bitübertragungsschicht (PHY) und den zugehörigen zeitlichen Ablauf der Übertragungsrahmen (MAC-Frame) in der MAC-Schicht.

Solange in der MAC-Schicht Daten zur Übertragung in einen Übertragungsrahmen eingestellt werden, was durch einen hohen Zustand in der MAC-Schicht mit der Kennzeichnung "Daten" dargestellt ist, d. h. einen aktiven Übertragungsrahmen (MAC-Frame), ist der Sender (PHY) der Bitübertragungssicht aktiv und sendet diese Daten aus dem Übertragungsrahmen aus.

Zum Zeitpunkt t₁ sind die in der MAC-Schicht anstehenden Daten vollständig übertragen, wobei bis zu dem Zeitpunkt t₃ keine Daten mehr zur Übertragung anstehen. Im Rahmen des Energy Efficient Ethernet geht der Ethernet-Transceiver (PHY) - im Falle des sendenden Knotens also mit seiner Sendefunktion - in einen Energiesparmodus (LPI-Modus, Low Power Idle) über. Hierfür steht ihm im Rahmen des Standards IEEE 802.3az eine Deaktivierungszeit T_{S} von 200 µs zur Verfügung, so dass der Ethernet-Transceiver PHY den Energiespar- bzw. Ruhemodus (LPI), in welchem der Ethernet-Transceiver PHY deaktiviert ist, zum Zeitpunkt t₂ erreicht.

Danach befindet sich der Ethernet-Transceiver PHY in seinem Ruhemodus (LPI), bis zum Zeitpunkt t₃ in der MAC-Schicht neue Daten in einen Übertragungsrahmen (MAC-Frame) eingestellt werden. Zu diesem Zeitpunkt beginnt der Ethernet-Transceiver (PHY, Sendeempfänger) mit einem Übergang in den aktiven Normalzustand, der gemäß dem Standard IEEE 802.3az für das Energy Efficient Ethernet nach einer Aktivierungszeit T_{W} von 30 µs zum Zeitpunkt t₄ erreicht ist. Danach werden die in der MAC-Schicht anstehenden und in den Übertragungsrahmen (MAC-Frame) eingestellten Daten durch den aktiven Ethernet-Transceiver (PHY) übertragen. Die in der MAC-Schicht zur Übertragung anstehenden Daten müssen in dem Übertragungsrahmen also die Aktivierungszeit T_{W} warten, bis eine Übertragung erfolgt. Hierdurch ergibt sich eine Verzögerung der Übertragung von 30 µs.

Fig. 1 stellt den Zustand gemäß dem bestehenden Standard IEEE 802.3az für das Energy Efficient Ethernet (EEE) dar, in dem auch die Erfindung realisiert werden kann.

In Fig. 2 ist ein ähnlicher Zustandswechsel nach dem Standard IEEE 802.3az für das Energy Efficient Ethernet dargestellt, bei dem ein Ethernet-Transceiver (PHY) in der Bitübertragungsschicht aus einem aktiven Normalzustand in einen Energiesparmodus (deaktivierten Zustand) wechselt, der als LPI-Zustand bezeichnet ist. Auch hier beginnt der Ethernet-Transceiver PHY nach abgeschlossener Übertragung der Daten in dem Übertragungsrahmen der MAC-Schicht zum Zeitpunkt t₁ damit, in den Energiesparmodus überzugehen. Bevor dieser nach der Deaktivierungszeit T_{S} erreicht ist, stehen in der MAC-Schicht allerdings wieder Daten zur Übertragung an, so dass diese in einen Übertragungsrahmen (MAC-Frame) eingestellt werden. Der Übergang in den Energiesparmodus (LPI-Modus) wird daher zum Zeitpunkt T_{S}-dt abgebrochen und der Aktivierungsvorgang des Ethernet-Transceivers PHY wird zum Zeitpunkt t₃, wenn Daten in den Übertragungsrahmen der MAC-Schicht eingestellt werden, wieder begonnen.

Unabhängig davon, ob der Energiesparmodus (deaktivierte Zustand) des Ethernet-Transceivers PHY tatsächlich erreicht war, wird die Aktivierungszeit T_{W} benötigt, um in einem aktiven Betriebszustand des Ethernet-Transceivers (PHY) die Übertragung der im Übertragungsrahmen der MAC-Schicht anstehenden Daten zu beginnen. Bei dem in Fig. 2 dargestellten Zyklus wird also überhaupt kein Strom gespart, da der Energiesparmodus des Ethernet-Transceivers PHY nicht erreicht wird. Dennoch entsteht bei der Übertragung der Daten die Verzögerung um die Aktivierungszeit T_{W}, die gemäß dem Standard IEEE 802.3az 30 µs beträgt.

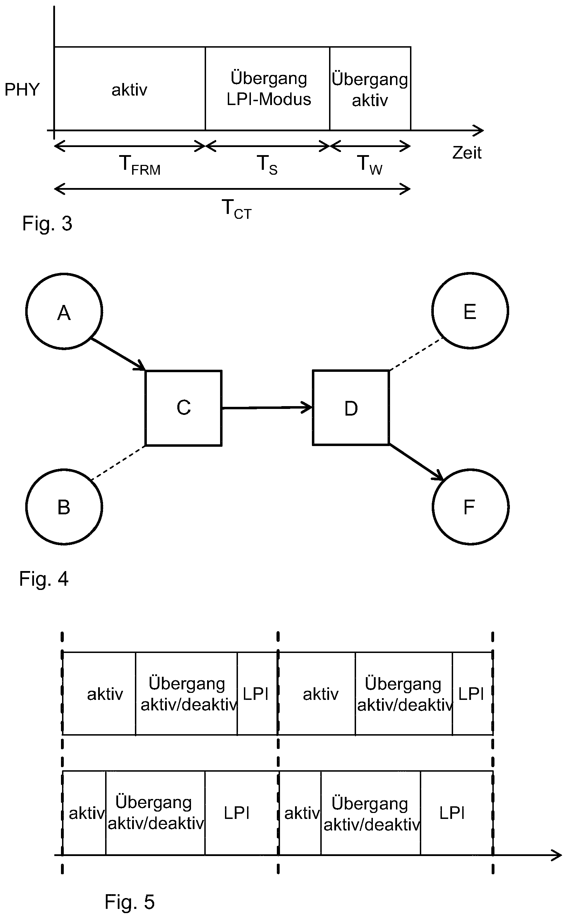

In der Fig. 3 ist die minimale Zykluszeit T_{CT} dargestellt, die sich aus dem aktiven Betriebszustand des Senders und/oder Empfängers (PHY-Gerät in der Bitübertragungsschicht) ergibt, und als Übertragungszeit T_{RFM} bezeichnet wird, wobei diese Zeit vorzugsweise die tatsächliche Übertragungszeit T_{WM} für die von der Anwendung innerhalb des Übertragungszyklus T_{CT} notwendigerweise zu übertragenden Daten darstellt. Hinzukommt für den minimalen Übertragungszyklus T_{CT} noch die Deaktivierungszeit T_{S} und die Aktivierungszeit T_{W}, die in der Summe die Zeit für den minimalen Übertragungszyklus T_{CT} bilden, da die Deaktivierungszeit T_{S} und die Aktivierungszeit T_{W}, die gemäß den Standards fest vorgegeben sind, berücksichtigt werden müssen, um keine unkontrollierten Verzögerungen in der Datenübertragung zu erhalten.

Hier setzt die Erfindung nun an, die bei dem Bedarf, Strom einzusparen, vorschlägt, den Ruhemodus auch bei laufenden Datenströmen zu nutzen, indem die Senderate als Teil der QoS-Anforderungen des Datenstroms durch Anpassung der Sendefrequenz dynamisch verändert wird. Durch den zyklischen Datenverkehr in dem IEEE 1722-Protokoll lässt sich auf den Teilstrecken zwischen den Endknoten (Sender und Empfänger) und Zwischenknoten (Switches) vorhersagen, wann die Datenpakete zu erwarten sind. Durch eine dynamische Anpassung der Sendefrequenz im Sinne einer verlangsamten Datenübertragung ist es daher möglich, den Energiesparmodus (LPI-Zustand) zu betreten, ohne dabei zusätzliche Latenzzeit oder Jitter (Schwankungen in der Ankunftszeit) für die Datenströme hinzuzufügen. Durch die bekannten Zeiten für den Wechsel zwischen Normal- bzw. Betriebsmodus und Energiesparmodus (Aktivierungszeit, Deaktivierungszeit) kann ermittelt werden, welche Sendefrequenz wählbar ist, um keine zusätzlichen Verzögerungen zu erreichen und trotzdem zusätzlich Strom zu sparen.

Beispielsweise kann eine konkrete Anforderung zur Einsparung von Energie lauten, 10 % mehr Strom auf Netzwerkebene einzusparen, um die Reichweite eines elektromotorischen Fahrzeugs um eine bestimmte Distanz zu erhöhen. An diese Anforderungen kann die Sendefrequenz der gemäß dem IEEE 1722-Protokoll ausgesandten Kommunikationsdaten durch die Anwendung selbst angepasst werden.

Dies ist ohne Qualitätsverlust jedoch nur bis zum Erreichen eines Grenzwerts möglich, der durch die minimale Zykluszeit definiert ist und durch die Anforderungen der Anwendung an die Qualität der zu übertragenden Daten bestimmt ist, weil innerhalb der minimalen Zykluszeit T_{CT} eine bestimmte Datenmenge übertragen werden muss und hierfür eine bestimmte Dauer der Übertragungszeit im aktiven Betriebsmodus notwendig ist. Im Normalfall können Daten nämlich nicht beliebig langsam verschickt werden, da der Empfänger diese Daten in einer bestimmten, zuvor definierten Zeit erwartet und weiter verarbeitet.

Soll dennoch Strom eingespart werden, d. h. der Sender und/oder der Empfänger der Daten für eine gewisse Zeit in einen Ruhemodus überführt werden, ist es notwendig, diese Obergrenze des Sendezyklus zu überschreiten. Hierfür ist eine Änderung der Anwendungsanforderungen an die Qualität der Daten bzw. die Dienstgüte der Datenübertragung (QoS) notwendig. Diese wird erfindungsgemäß durch die Anwendung selbst vorgenommen, indem entweder die Sendezykluszeit erhöht wird und damit die Zeit, in welcher der Empfänger die Daten erhält, verlängert wird, und/oder der Inhalt der Daten durch Verkleinerung der effektiven Datenmenge verringert wird, was eine schnellere Beendigung des Sendens nach sich zieht, da die Datenpakete kleiner sind. Die eingesparte Zeit kann dann dem Energiesparmodus zugerechnet werden.

Fig. 4 stellt ein Beispiel für einen Datenstrom dar, der von dem Sendeknoten A des Kraftfahrzeugs zu dem Empfangsknoten F des Kraftfahrzeugs über die Zwischenknoten C und D (Switches) verläuft.

Dieser Datenstrom hat üblicherweise eine Zykluszeit von 125 µs, die so kurz ist, dass auf den Verbindungen AC, CD und DF keine Energie gespart werden kann, da der Ruhemodus im Rahmen der standardmäßig vorgegebenen Zykluszeit nicht betreten werden kann.

Besteht nun die Anforderung an das Kommunikationssystem, dennoch Strom einzusparen, so wird dies an die Anwendung übermittelt. Diese kann die Zykluszeit des Datenstroms erhöhen, bspw. auf einen Wert von T_{CT} gleich 300 µs. Dies bedeutet, dass nur alle 300 µs ein Datenpaket verwendet wird. Somit können die PHY-Geräte (Sender und/oder Empfänger) der Bitübertragungsschicht zwischenzeitlich in den Ruhemodus wechseln und der Energiebedarf für die Datenverbindung AF insgesamt reduziert werden, was durch eine höhere Zykluszeit erkauft ist. Diese kann aber ggf. ohne Qualitätseinbußen realisiert werden, sofern die konkrete Anwendung einen derartigen Sendezyklus erlaubt.

Eine weitere, ggf. auch kumulative Möglichkeit zur Energieeinsparung besteht darin, dass das System bei Anforderung einer Energieeinsparung bei der Kommunikation dies der die Daten übertragenden Anwendung meldet. Die Anwendung kann dann überprüfen, ob der Inhalt der zu übertragenden Daten verändert werden kann, was mit einer Verringerung der Qualität des Datenstroms verbunden ist.

Wenn dies möglich ist, stehen beispielsweise für die Video- und Audiodatenübertragung folgende Ausführungsbeispiele zur Verfügung.

Beispielsweise kann die Videoqualität eines zu übertragenden Datenstroms durch Verwendung eines anderen Codecs, weniger Frames pro Sekunde und/oder eine kleinere Auflösung erreicht werden. Hierdurch entstehen kleinere Datenpakete, die in einer kürzeren Übertragungszeit übertragen werden können. Dadurch müssen effektiv also weniger Daten übertragen werden. Weil die Übertragungszeit eines Frames proportional zu seiner Größe ist, ist die Übertragung der anstehenden Daten also umso schneller abgeschlossen, je kleiner der Übertragungsrahmen (Frame) ist.

Ein weiterer Anwendungsfall ist die Veränderung eines Audio-Datenstroms, bei dem auch ein anderer Codec, weniger Kanäle, eine geringere Auflösung und/oder ein Virtual Surround Sound mit zwei Kanälen statt einem echten Surround Sound mit sechs Kanälen verwendet werden kann. Werden mehrere Kanäle übertragen (Stereo, Multikanal), so kann die Anwendung Kanäle und somit Daten einsparen, ohne dass der Kerninhalt verloren geht.

Die Reduzierung der übertragenden Datenmenge wirkt sich, wie in dem Zeitdiagramm von Fig. 5 schematisch dargestellt, aus, indem die Zeit für den aktiven Betriebsmodus zugunsten des Ruhezustands LPI verkürzt werden kann. In Fig. 5 ist in dem oberen Balken die Zeitbilanz zweier aufeinander folgenden Übertragungszyklen T_{CT} dargestellt, wobei der Ruhemodus LPI deutlich kürzer als der aktive Übertragungsmodus für die notwendigerweise zu übertragenden Daten ist.

Nach Reduktion der Datenmenge werden diese in kürzerer Zeit übertragen, so dass der aktive Betriebszustand für die Datenübertragung zugunsten des Ruhezustands verlängert werden kann, wie in dem unteren Balken dargestellt.

Durch das erfindungsgemäß vorgeschlagene Verfahren ist die Erfindung also in der Lage, einen aktiven und durch eine Anwendung flexibel vorgebaren Beitrag zur Energieeinsparung im Kommunikationssystem des Kraftfahrzeugs zu leisten.

## Patentansprüche

1. Verfahren zum Übertragen von Daten aus einer Anwendung zwischen Knoten eines Kraftfahrzeugs mit einem Ethernet-Transportprotokoll,
wobei das Ethernet Transportprotokoll in einem Modus betrieben wird, bei dem die Sender und Empfänger (PHY) eines Knotens in Nicht-Nutzungsperioden, in denen keine ersten Daten zu übertragen sind, deaktiviert werden, und sofern Daten zur Übertragung anstehen, wieder aktiviert werden,
wobei das Merkmal "deaktiviert werden" dadurch definiert ist, dass die Sender und Empfänger (PHY) in einer Deaktivierungszeit (T_{S}) aus einem Betriebsmodus (aktiv) in einen Ruhemodus (LPI) überführt werden und
wobei das Merkmal "aktiviert werden" dadurch definiert ist, dass die Sender und Empfänger (PHY) in einer Aktivierungszeit (T_{W}) aus dem Ruhemodus (LPI) in einen Betriebsmodus (aktiv) überführt werden, und
wobei ein Übertragungszyklus definiert ist, als die Zeit von einer Datenübertragung zu einer nächsten Datenübertragung in der MAC-Schicht, das heißt als diejenige Zeit, mit der die Anwendung neue Daten in der MAC-Schicht erhält bzw. aussendet,
**dadurch gekennzeichnet,**
**dass** ein Grenzwert einer Sendefrequenz definiert ist durch das Inverse der Summe aus der Aktivierungszeit (T_{W}), der Deaktivierungszeit (T_{S}) und einer Übertragungszeit (T_{FRM}) für die von der Anwendung innerhalb eines Übertragungszyklus zu übertragenden Daten, und
**dass** bei einer Anforderung zur Einsparung von Energie der Übertragungszyklus durch Einfügen eines Ruhemodus verlängert wird, solange der Grenzwert der Sendefrequenz eingehalten wird,
wobei die Anwendung überprüft, ob die Anforderung der Anwendung an den Inhalt der zu übertragenden Daten reduziert werden kann,
wobei der Inhalt der zu übertragenden Daten dadurch reduziert wird, dass bei Videodaten die Videoqualität eines zu übertragenden Datenstroms reduziert wird und bei Audiodaten die Audioqualität eines zu übertragenden Datenstroms reduziert wird,
wobei der Inhalt der zu übertragenden Daten nur reduziert wird, wenn die Anforderung zur Einsparung von Energie ohne Überschreiten des Grenzwerts der Sendefrequenz nicht möglich ist.

2. Steuergerät mit einer Recheneinheit, welches als Knoten eines Netzwerks in einem Kraftfahrzeug mit einem anderen Knoten kommuniziert und dabei Daten einer Anwendung überträgt, wobei die Recheneinheit durch Programmcodemittel zum Übertragen von Daten mit einem Ethernet-Transportprotokoll zwischen Knoten eines Kraftfahrzeugs eingerichtet ist, **dadurch gekennzeichnet, dass** die Recheneinheit durch Programmcodemittel zur Durchführung des Verfahrens nach Anspruch 1 eingerichtet ist.

3. Computerprogrammprodukt mit Programmcodemitteln, die dazu geeignet sind, bei Ausführung auf einer Recheneinheit die Recheneinheit zur Durchführung des Verfahrens nach Anspruch 1 einzurichten.

## Claims

1. Method for transmitting data from an application between nodes of a motor vehicle using an Ethernet transport protocol,
wherein the Ethernet transport protocol is operated in a mode in which the transmitters and receivers (PHY) of a node are deactivated in non-use periods, in which no first data need to be transmitted, and are activated again when data are pending transmission,
wherein the feature "are deactivated" is defined in that the transmitters and receivers (PHY) are transferred from an operating mode (active) to a quiescent mode (LPI) in a deactivation time (T_{S}) and
wherein the feature "are activated" is defined in that the transmitters and receivers (PHY) are transferred from the quiescent mode (LPI) to an operating mode (active) in an activation time (T_{W}), and
wherein a transmission cycle is defined as the time from one data transmission to a subsequent data transmission in the MAC layer, that is to say as that time in which the application receives and/or transmits new data in the MAC layer, **characterized**
**in that** a limit value of a transmission frequency is defined by the inverse of the sum of the activation time (T_{W}), of the deactivation time (T_{S}) and of a transmission time (T_{FRM}) for the data to be transmitted by the application within a transmission cycle, and
**in that** a requirement to save energy causes the transmission cycle to be extended by inserting a quiescent mode, so long as the limit value of the transmission frequency is observed,
wherein the application checks whether the requirement for the application can be reduced to the content of the data that are to be transmitted,
wherein the content of the data that are to be transmitted is reduced by, in the case of video data, reducing the video quality of a data stream that is to be transmitted and, in that in the case of audio data, reducing the audio quality of a data stream that is to be transmitted,
wherein content of the data that are to be transmitted is reduced only if the requirement to save energy is not possible without exceeding the limit value of the transmission frequency.

2. Controller having a computation unit that, as a node of a network in a motor vehicle, communicates with another node and in so doing transmits data from an application, wherein the computation unit is set up by program code means for transmitting data using an Ethernet transport protocol between nodes of a motor vehicle, **characterized in that** the computation unit is set up by program code means for carrying out the method according to Claim 1.

3. Computer program product having program code means that are suited to setting up the computation unit for carrying out the method according to Claim 1 when said program code means are executed on a computation unit.

## Revendications

1. Procédé de transmission de données à partir d'une application entre des nœuds d'un véhicule à moteur avec un protocole de transport Ethernet,
dans lequel le protocole de transport Ethernet fonctionne dans un mode où l'émetteur et le récepteur (PHY) d'un nœud sont désactivés dans des périodes d'inactivité, lors desquelles il n'y a pas de premières données à transmettre, et sont réactivés dans la mesure où des données à transmettre sont présentes, dans lequel la caractéristique « est désactivé » est définie en ce que l'émetteur et le récepteur (PHY) sont passés d'un mode de fonctionnement (actif) à un mode repos (LPI) dans un temps de désactivation (T_{S}) et
dans lequel la caractéristique « est activé » est définie en ce que l'émetteur et le récepteur (PHY) sont passés d'un mode repos (LPI) à un mode de fonctionnement (actif) dans un temps d'activation (T_{W}), et
dans lequel un cycle de transmission est défini comme le temps d'une transmission de données à une transmission de données suivantes dans la couche MAC, c'est-à-dire comme le temps avec lequel l'application obtient ou émet de nouvelles données dans la couche MAC,
**caractérisé en ce**
**qu'**une valeur limite d'une fréquence d'émission est définie comme l'inverse de la somme du temps d'activation (T_{W}), du temps de désactivation (T_{S}) et d'un temps de transmission (T_{FRM}) pour les données à transmettre depuis l'application au sein d'un cycle de transmission, et en ce
**que** lors d'une exigence d'économie d'énergie, le cycle de transmission est prolongé par ajout d'un mode repos, tant que la valeur limite de la fréquence d'émission est respectée, dans lequel l'application vérifie si l'exigence de l'application pour le contenu de données à transmettre peut être réduite,
dans lequel le contenu des données à transmettre est réduit en ce que, pour des données vidéo, la qualité vidéo d'un flux de données à transmettre est réduite et, pour des données audio, la qualité audio d'un flux de données à transmettre est réduite, dans lequel le contenu des données à transmettre est seulement réduit lorsque l'exigence d'économie d'énergie n'est pas possible sans dépasser la valeur limite de la fréquence d'émission.

2. Appareil de commande doté d'une unité de calcul, lequel communique en tant que nœud d'un réseau dans un véhicule à moteur avec un autre nœud et transmet ainsi les données d'une application, dans lequel l'unité de calcul est disposée par un moyen de code informatique pour transmettre des données avec un protocole de transport Ethernet entre des nœuds d'un véhicule à moteur, **caractérisé en ce que** l'unité de calcul est disposée par un moyen de code informatique pour mettre en œuvre le procédé selon la revendication 1.

3. Produit-programme informatique doté de moyens de code informatique, lesquels sont adaptés, lors d'une exécution sur une unité de calcul, pour disposer l'unité de calcul pour la mise en œuvre du procédé selon la revendication 1.
